# EUROPÄISCHE PATENTSCHRIFT

(11) **EP 2 710 939 B1**
(45) Veröffentlichungstag und Bekanntmachung des Hinweises auf die Patenterteilung: **12.08.2015**
(21) Anmeldenummer: 13184037.3
(22) Anmeldetag: 12.09.2013
(51) Int. Cl.: A47J 31/44

(54) **Kaffeevollautomat mit flexibler Leitung**
Fully automatic coffee maker with flexible conduit
Machine à café totalement automatique dotée d'un conduit souple

(30) Priorität: 21.09.2012 DE 102012216963
(43) Veröffentlichungstag der Anmeldung: 26.03.2014
(73) Patentinhaber: BSH Hausgeräte GmbH, 81739 München (DE)
(72) Erfinder: Franzke, Peter, 83229 Sachrang/Aschau (DE); Huber, Michael, 6341 Ebbs (AT); Wölfler, Andreas, 5760 Saalfelden (AT)

(56) Entgegenhaltungen:
- DE-A1-102011 053 216
- DE-U1-202009 004 756

## Beschreibung

Die Erfindung betrifft einen Kaffeevollautomaten für Haushaltsanwendungen, mit einer zumindest einseitig, nämlich an einem freien Ende betätigbaren flexiblen Leitung. "Betätigbar" bedeutet, dass ein Bediener des Kaffeevollautomaten die flexible Leitung bei der gewöhnlichen Zubereitung eines Kaffeegetränks zumindest an einem ihrer Enden bedienen kann, regelmäßig um einen Anschluss herzustellen.

Die flexible Leitung kann eine elektrische oder fluidische Versorgungsleitung oder Entsorgungsleitung für die Zubereitung von Heißgetränken sein. Eine zumindest einseitige Bedienung kann erforderlich sein, wenn die Leitung an Vorrats- oder Entsorgungsbehälter angeschlossen werden muss, die ihrerseits zum Auffüllen oder Entleeren entnommen werden müssen oder ohnehin außerhalb des Vollautomaten angeordnet sind. Je nach Länge der Leitung kann sie zumindest auf einem Abschnitts ihres Verlaufs am Kaffeevollautomaten festgelegt sein, so dass ihre Lage weitgehend definiert ist und keinen unschönen Eindruck hinterlässt oder die weitere Betätigung des Kaffeevollautomaten behindert. Hygienische Anforderungen können es erfordern, dass eine Versorgungsleitung abnehmbar ist. Ihre Festlegung hat dann reversibel ausgebildet zu sein. Eine dafür übliche Form sind Haken, in die die Leitung eingeclipst werden kann. Sie sind jedoch nicht nur anfällig gegenüber Bruch bei einer unsanften Bedienung, sondern auch optisch unschön, insbesondere wenn die Leitung nicht montiert ist.

Die DE 10 2011 053 216 A1 offenbart einen Getränkebereiter zur Ausgabe von Kaffee, Milch und/oder Milchschaum mit einem Milchbehälter sowie mindestens einer Halteeinrichtung für die Milchleitung. Um die Handhabung und Befestigung der Milchleitung bei Nichtgebrauch bzw. bei der manuellen Reinigung zu verbessern, ist der Milchaufschäumer/Milchverteiler mit einer Aufnahme für die Milchleitung ausgebildet, die die Milchleitung in einer Parkposition fixiert.

Ferner offenbart die DE 20 2009 004 756 U1 eine Kaffeemaschine, die über eine Aufnahme zum Einsetzen einer Milchaufschäumeinrichtung verfügt.

Es ist Aufgabe der Erfindung, eine flexible Leitung in einer bedienungsfreundlichen und optisch ansprechenden Weise festzulegen.

Diese Aufgabe wird erfindungsgemäß bei einem Kaffeevollautomaten der eingangs genannten Art dadurch gelöst, dass die flexible Leitung über einen Fixierabschnitt verfügt und der Kaffeevollautomat eine hakenfreie Einrichtung zum reversiblen Festlegen des Fixierabschnitts am Kaffeevollautomaten umfasst. Der leitungsseitige Fixierabschnitt und die vollautomatenseitige Einrichtung wirken als Halterung der Leitung zusammen. Der Fixierabschnitt der Leitung kann in einem einfachen Fall lediglich ein freier Abschnitt der Leitung sein, an dem sie behinderungsfrei gehalten werden kann. Jedenfalls korrespondiert er mit der hakenfreien Einrichtung am Kaffeevollautomaten in der Weise, dass die Leitung an ihrem Fixierabschnitt und der Einrichtung reversibel, also wiederholbar in weitgehend der selben Position, und benutzerfreundlich festlegbar ist. Dadurch bietet der Kaffeevollautomat ein aufgeräumtes Bild, bei dessen Bedienung die Leitung zumindest optisch nicht stört. Die hakenfreie Einrichtung umfasst dabei keine abstehenden Elemente, die beschädigungsanfällig sind oder bei einem Bedienungszustand des Kaffeevollautomaten, der die Leitung nicht erfordert, optisch oder aufgrund abstehender Haken oder dergleichen die Bedienung beeinträchtigen würde.

Die Halterung aus der Einrichtung und dem Fixierabschnitt lässt sich nach einer weiteren vorteilhaften Ausgestaltung der Erfindung insbesondere bei Kaffeevollautomaten anbringen, die eine bedienerseitig zu öffnende Servicetüre oder -klappe aufweisen, wobei die Leitung nach einem Öffnen der Servicetüre bedienerseitig werkzeuglos entnehmbar oder einsetzbar ist. Die Halterung sorgt für eine weitgehend definierte Lage der Leitung, so dass sie beim Verschließen der Servicetüre nicht versehentlich eingeklemmt werden kann.

Erfindungsgemäß ist der Fixierabschnitt magnetisch festlegbar.Er kann beispielsweise aufgrund einer zwischen ihm und einem metallischen Bestandteil des Kaffeevollautomaten wirkenden magnetischen Kraft anziehbar sein. Magnetische Kräfte können ausreichend groß gewählt werden, um die Leitung auch bei ihrer geringfügigen mechanischen Belastung im Betrieb zuverlässig zu halten. Metallische Bestandteile, die als Einrichtung mit dem Fixierabschnitt zusammenwirken, sind im Kaffeevollautomaten ohnehin vorhanden oder jedenfalls leicht in einem geeigneten Bereich anbringbar. Eine Fixiereinrichtung auf Basis von Magnetkräften ist darüber hinaus leicht bedienbar und robust, so dass sie eine hohe Lebensdauer erreichen kann. Mangels abstehender Teile kann sie auch die sonstige Bedienung des Kaffeevollautomaten nicht stören. Zudem lässt sich die Halterung, die das Magnetprinzip nutzt, optisch ansprechend und ggf. vollkommen unauffällig gestalten.

Nach einer weiteren vorteilhaften Ausgestaltung der Erfindung kann der Fixierabschnitt selbst ein ferromagnetisches oder magnetisierbares Material umfassen oder daraus ausgebildet sein. Damit kann der Fixierabschnitt selbst die Haltekräfte hervorrufen, die ihn an einem beliebigen metallischen Bestandteil des Kaffeevollautomaten fixierbar machen. Er kann aus einem magnetisierten oder magnetischen Metallrohr gebildet sein oder aus einem Kunststoff mit einem eingegossenen, eingeschobenen, angeklebten, angeclipsten oder anderweitig befestigten Metallabschnitt, beispielsweise einem Metallstreifen. Automatenseitig ist dann lediglich ein metallischer Gegenstand als Einrichtung erforderlich, der ggf. nicht einmal separat angebracht werden muss, sondern ohnehin schon vorhanden sein kann.

Alternativ dazu kann die Einrichtung am Kaffeevollautomaten, an dem der Fixierabschnitt festlegbar ist, ein ferromagnetisches oder magnetisierbares Material umfassen oder daraus ausgebildet sein und der Fixierabschnitt ein zumindest magnetisierbares, aber nicht unbedingt magnetisches Material umfassen oder daraus ausgebildet sein. Insbesondere bei Verschleißgegenständen, die häufiger ausgetauscht werden müssen, wie es ggf. die flexible Leitung sein kann, kann sich diese Ausführungsform als finanzieller Vorteil erweisen. Der Fixierabschnitt an der flexiblen Leitung kann damit kostengünstiger ausgestaltet sein.

Der Entfall von zumindest optisch hervortretenden Befestigungseinrichtungen kann die Nachvollziehbarkeit und die Bedienung der Halterung für den Bediener erschweren. Nach einer weiteren vorteilhaften Ausgestaltung der Erfindung kann daher die Einrichtung am Kaffeevollautomaten komplementär mit dem Fixierabschnitt an der flexiblen Leitung ausgebildet sein. Dazu kann der Fixierabschnitt eine charakteristische Form erhalten, der die Einrichtung am Kaffeevollautomaten quasi in einer Negativform entspricht. Beispielsweise kann der Fixierabschnitt lediglich eine Zylinderform aufweisen, die Einrichtung am Kaffeevollautomaten kann dementsprechend konkav und in den Abmessungen weitgehend dem Fixierabschnitt entsprechend ausgebildet sein, um einen optischen Bezug zwischen dem Fixierabschnitt einerseits und der Einrichtung andererseits zu ermöglichen. Alternativ oder zusätzlich kann dem Bediener eine farbliche Gestaltung des Fixierabschnitts und der Einrichtung einen nachvollziehbaren Bezug zueinander bieten. Somit sind Montage und Demontage der flexiblen Leitung leicht nachzuvollziehen und zu bedienen und machen zugleich einen hochwertigen Eindruck.

Nach einer weiteren vorteilhaften Ausgestaltung der Erfindung kann der Fixierabschnitt steif ausgebildet sein. Dadurch erleichtert sich ebenfalls die Bedienung, weil er eine konkrete Form bietet, die beim Festlegen leichter zu bedienen ist als eine flexible Form. Außerdem verliert die flexible Leitung einen Teil ihrer flexiblen Leitungslänge, die insbesondere hinter einer Gerätetür der Gefahr des Einklemmens unterliegt.

Nach einer weiteren vorteilhaften Ausgestaltung der Erfindung kann die flexible Leitung einen Fluidschlauch darstellen, wie er regelmäßig für die Frischmilchzufuhr eines Kaffeevollautomaten benötigt wird. Aus hygienischen Gründen muss er entnehmbar sein, um regelmäßig gereinigt werden zu können. Er muss flexibel und meistens an beiden Enden bedienbar sein, um einerseits an unterschiedlich hohe Behälter für Milch angeschlossen bzw. eingesteckt werden zu können und um andererseits an einem höhenverstellbaren Auslauf für Kaffee- und/oder Milchgetränke angeschlossen werden zu können. Außerdem soll der Fluidschlauch an sich optisch weitgehend unscheinbar sein. Andererseits soll der Bediener ihn aber in die richtige Position und Lage bringen können.

Nach einer weiteren vorteilhaften Ausgestaltung der Erfindung kann der steife Fixierabschnitt etwa ein Fünftel bis ein Viertel oder ein Drittel der Gesamtlänge der flexiblen Leitung einnehmen. Damit kann sich der flexible Bereich der flexiblen Leitung beschränken lassen, so dass er weniger der Gefahr ausgesetzt ist zu stören oder eingeklemmt zu werden. Ist der Fixierabschnitt in einem mittleren Bereich angebracht, so lassen sich die Längen der freien, flexiblen Enden auf die Bedienungserfordernisse genau anpassen.

Das Prinzip der Erfindung wird nachfolgend anhand einer Zeichnung beispielshalber noch näher erläutert. In der Zeichnung zeigen:
- Figur 1:: die Frontansicht eines Einbau-Kaffeevollautomaten,
- Figur 2:: den Kaffeevollautomaten bei geöffneter Servicetür.

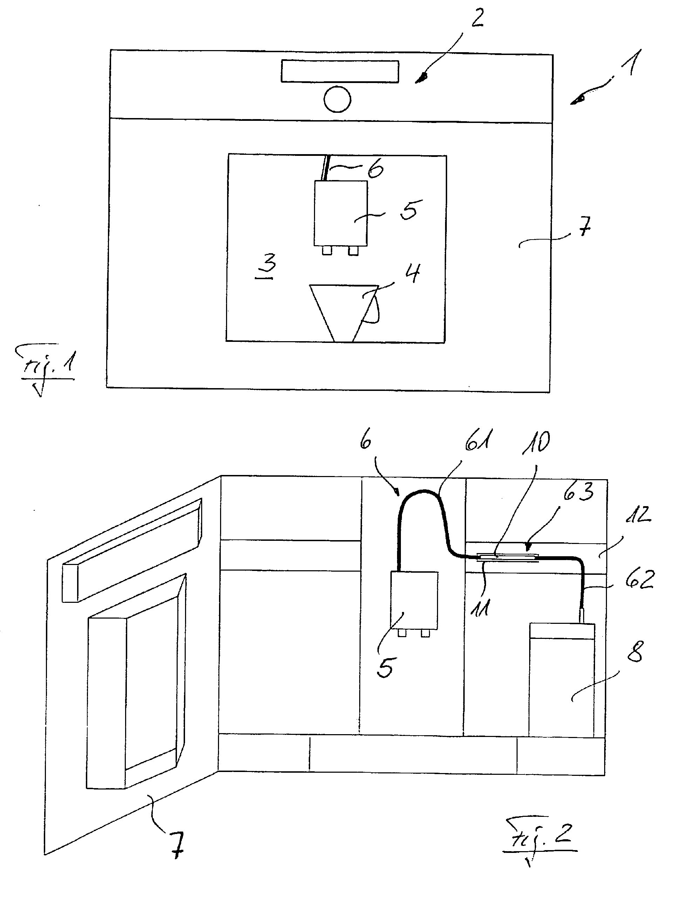

Figur 1 zeigt eine Frontansicht eines Einbau-Kaffeevollautomaten 1 von einer Bedienerseite aus. In einem oberen Bereich seiner Frontseite befindet sich eine Bedien- und Anzeigeneinheit 2. Darunter liegt in einer quasi fensterartigen Umrahmung ein Zubereitungsbereich 3. Eine Tasse 4 ist unter einem höhenverstellbaren Getränkeauslauf 5 abgestellt. Der Getränkeauslauf 5 kann an die Höhe der Tasse 4 oder eines alternativ abgestellten Lattemacchiato-Glases angepasst werden. In den Getränkeauslauf 5 mündet von einer Oberseite her ein Milchschlauch 6, der im Übrigen für den Bediener unsichtbar hinter einer drehbar gelagerten Tür 7 verläuft. Sie bildet den Rahmen um den Zubereitungsbereich 3.

Figur 2 zeigt eine Ansicht des Kaffeevollautomaten 1 bei geöffneter Tür 7: sie gibt den Blick frei auf den Getränkeauslauf 5 und den vollständig Verlauf des fest daran angeschlossenen Milchschlauchs 6 als weitgehend flexibler Leitung. Der Milchschlauch 6 verläuft vom Getränkeauslauf 5 bis zu einem Vorratsbehälter 8 für Milch, der in dem Kaffeevollautomaten 1 in einem rechten Bereich und ebenfalls hinter der drehbar gelagerten Tür 7 abgestellt ist.

Der Milchschlauch 6 ist in drei Abschnitte 61, 62, 63 unterteilt. Der erste Abschnitt 61 ist flexibel, weil der an den höhenverstellbaren Getränkeauslauf 5 anschließt. Ebenfalls flexibel ist der letzte Abschnitt 62, weil er an unterschiedliche und nicht normierte Vorratsbehälter 8 angeschlossen werden muss. Sie können unterschiedliche Höhen aufweisen, in die der Milchschlauch 6 einsteckbar sein soll. Sein mittlerer Bereich 63 ist steif ausgebildet und besteht aus einem metallischen Mittelstück 10 als Fixierabschnitt. Das Mittelstück 10 besteht aus einem magnetischen Rohrstück, in das der flexible erste Abschnitt 61 und der flexible letzte Abschnitt 62 eingesteckt sind.

Das Mittelstück 10 ruht in einer rillenförmigen Aufnahme 11 als Einrichtung am Kaffeevollautomaten 1. Der Krümmungsradius seiner Rille entspricht dem Durchmesser des rohrförmigen Mittelstücks 10, so dass das Mittelstück 10 genau in die Aufnahme 11 passt. Die Aufnahme 11 liegt frei zugänglich und optisch leicht erkennbar auf einer Traverse 12 im Kaffeevollautomaten 1, so dass sie jederzeit im Blickfeld des Bedieners liegt.

Damit ist der Milchschlauch 6 an drei Punkten gehalten und in seiner Lage definiert: sein linksseitiges freies Ende am ersten Abschnitt 61 steckt im Getränkeauslauf 5, das Mittelstück 10 hält ihn an der Aufnahme 11 und sein zweiter flexibler Abschnitt 62 ruht im Vorratsbehälter 8. Die flexiblen Abschnitte 61, 62 weisen eine Länge auf, die ihnen die erforderliche Bewegungsfreiheit für den höhenverstellbaren Getränkeauslauf 5 einerseits und für unterschiedliche Vorratsbehälter 8 andererseits bietet. Ihre Länge wird definiert durch die Gesamtlänge des Milchschlauchs 6 und die Länge des steifen Mittelstücks 10. Seine Länge macht in etwa ein Viertel der Gesamtlänge des Milchschlauchs 6 aus.

Zur Demontage und beispielsweise Reinigung des Milchschlauchs 6 zieht ihn der Benutzer vom Getränkeauslauf 5 ab und aus dem Vorratsbehälter 8 heraus. Abschließend kann er ihn unter Überwindung der Magnetkraft von der Aufnahme 11 abziehen.

Zur Montage kann der Milchschlauch 6 in der umgekehrten Reihenfolge eingesetzt werden. Wegen seiner symmetrischen Ausbildung kann er zunächst an der Aufnahme 11 magnetisch befestigt werden. Anschließend lassen sich die flexiblen Abschnitte 61, 62 an dem Getränkeauslauf 5 einerseits und in den Vorratsbehälter 8 andererseits einstecken. Aufgrund seiner prominenten Lage und der passenden Ausgestaltung als Negativform des Mittelstücks 10 lässt sich die Aufnahme 11 für den Benutzer intuitiv als Gegenstück zur Befestigung des Milchschlauchs 6 erkennen. Eine steife Ausbildung im Bereich des Mittelstücks 10 verkürzt die flexible Länge des Milchschlauchs 6, so dass keine störenden Schlauchschlaufen entstehen, die eingeklemmt werden könnten. Über die Dimensionierung des steifen Mittelstücks 10 lässt sich folglich die komplette Lage des Milchschlauchs 6 definieren.

Da es sich bei dem vorhergehenden, detailliert beschriebenen Fixierabschnitt um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Ausgestaltungen der Abschnitte des Milchschlauchs in anderer Form als in der hier beschriebenen erfolgen. Ebenso kann die Aufnahme in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 2: Bedien- und Anzeigeneinheit
- 3: Zubereitungsbereich
- 4: Tasse
- 5: Getränkeauslauf
- 6: Milchschlauch
- 7: Tür
- 8: Vorratsbehälter
- 10: Mittelstück
- 11: Aufnahme
- 12: Traverse
- 61, 62, 63: Abschnitte des Milchschlauchs 6

## Patentansprüche

1. Kaffeevollautomat (1) für Haushaltsanwendungen, mit einer zumindest einseitig betätigbaren flexiblen Leitung (6), einem Fixierabschnitt (10) an einem mittleren Abschnitt der Leitung (6) und einer Einrichtung (11) zum reversiblen Festlegen des Fixierabschnitts (10) am Kaffeevollautomat (1), **gekennzeichnet durch** eine magnetische Festlegung des Fixierabschnitts (10).

2. Kaffeevollautomat (1) nach dem obigen Anspruch mit einer bedienerseitig zu öffnenden Servicetüre (7), **dadurch gekennzeichnet, dass** die Leitung (6) nach einem Öffnen der Servicetüre (7) werkzeuglos entnehmbar oder einsetzbar ist.

3. Kaffeevollautomat (1) nach dem obigen Anspruch, **dadurch gekennzeichnet, dass** der Fixierabschnitt (10) ein magnetisches oder magnetisierbares Material umfasst oder daraus ausgebildet ist.

4. Kaffeevollautomat (1) nach einem der obigen beiden Ansprüche mit einem Gegenstück (11) am Kaffeevollautomaten (1), an dem der Fixierabschnitt (10) festlegbar ist, **dadurch gekennzeichnet, dass** das Gegenstück (11) ein magnetisches Material umfasst oder daraus ausgebildet ist und der Fixierabschnitt (10) ein zumindest magnetisierbares Material umfasst oder daraus ausgebildet ist.

5. Kaffeevollautomat (1) nach dem obigen Anspruch, **gekennzeichnet durch** eine komplementäre Gestaltung des Gegenstücks (11) mit dem Fixierabschnitt (10).

6. Kaffeevollautomat (1) nach einem der obigen Ansprüche, **dadurch gekennzeichnet, dass** der Fixierabschnitt (10) steif ausgebildet ist.

7. Kaffeevollautomat (1) nach dem obigen Anspruch, **gekennzeichnet durch** einen Fluidschlauch (6) als Leitung.

8. Kaffeevollautomat (1) nach dem obigen Anspruch, **dadurch gekennzeichnet, dass** der Fixierabschnitt (10) etwa ein Fünftel bis ein Drittel der Gesamtlänge der flexiblen Leitung (6) einnimmt.

## Claims

1. A fully automatic coffee maker (1) for household applications, having a flexible conduit (6) which can be actuated at least on one side, a fixing section (10) on a central section of the conduit (6) and a facility (11) for the reversible fixing of the fixing section (10) on the fully automatic coffee maker (1), **characterised by** a magnetic fixing of the fixing section (10).

2. The fully automatic coffee maker (1) as claimed in the above claim having a service door (7) to be opened on the operator side, **characterised in that** the conduit (6) can be removed or inserted without the need for a tool after opening the service door (7).

3. The fully automatic coffee maker (1) as claimed in the above claim, **characterised in that** the fixing section (10) includes a magnetic or magnétisable material or is embodied from the same.

4. The fully automatic coffee maker (1) as claimed in one of the above two claims, having a mating piece (11) on the fully automatic coffee maker (1), to which the fixing section (10) can be fixed, **characterised in that** the mating piece (11) includes a magnetic material or is embodied therefrom and the fixing section (10) includes an at least magnetisable material or is embodied from the same.

5. The fully automatic coffee maker (1) as claimed in the above claim, **characterised by** a complementary design of the mating piece (11) with the fixing section (10).

6. The fully automatic coffee maker (1) as claimed in one of the above claims, **characterised in that** the fixing section (10) is embodied to be rigid.

7. The fully automatic coffee maker (1) as claimed in the above claim, **characterised by** a fluid pipe (6) as the conduit.

8. The fully automatic coffee maker (1) as claimed in the above claim, **characterised in that** the fixing section (10) takes up approximately one fifth to one third of the overall length of the flexible conduit (6).

## Revendications

1. Machine à café totalement automatique (1) destinée à des applications domestiques, avec un conduit souple (6) pouvant être actionné par au moins un côté, avec une section de fixation (10) sur une partie moyenne du conduit (6) et avec un dispositif (11) pour attacher de façon réversible la section de fixation (10) à la machine à café totalement automatique (1), **caractérisée par** une attache magnétique de la section de fixation (10).

2. Machine à café totalement automatique (1) selon la revendication précédente avec une porte de service (7) à ouvrir du côté utilisateur, **caractérisée en ce que** le conduit (6) peut être enlevé ou mis en place sans outil après une ouverture de la porte de service (7).

3. Machine à café totalement automatique (1) selon la revendication précédente, **caractérisée en ce que** la section de fixation (10) comprend un matériau magnétique ou magnétisable ou en est constituée.

4. Machine à café totalement automatique (1) selon l'une quelconque des deux revendications précédentes avec un support (11) sur la machine à café totalement automatique (1), auquel la section de fixation (10) peut être attachée, **caractérisée en ce que** le support (11) comprend un matériau magnétique ou en est constitué et la section de fixation (10) comprend un matériau au moins magnétisable ou en est constituée.

5. Machine à café totalement automatique (1) selon la revendication précédente, **caractérisée par** une configuration complémentaire du support (11) par rapport à la section de fixation (10).

6. Machine à café totalement automatique (1) selon l'une quelconque des revendications précédentes, **caractérisée en ce que** la section de fixation (10) est rigide.

7. Machine à café totalement automatique (1) selon la revendication précédente, **caractérisée par** un tuyau à fluide (6) comme conduit.

8. Machine à café totalement automatique (1) selon la revendication précédente, **caractérisée en ce que** la section de fixation (10) occupe environ un cinquième à un tiers de la longueur totale du conduit souple (6).
